Europäisches Patentamt

European Patent Office

Office européen des brevets

(11) Numéro de publication: **0 209 476**

**A2**

## (12) DEMANDE DE BREVET EUROPEEN

(21) Numéro de dépôt: 86420198.3

(22) Date de dépôt: 18.07.86

(51) Int. Cl.⁴: **G01N 27/20**

(30) Priorité: 19.07.85 FR 8511274

(43) Date de publication de la demande:
21.01.87 Bulletin 87/04

(84) Etats contractants désignés:
AT BE CH DE FR GB IT LI LU NL SE

(71) Demandeur: ETAT FRANCAIS représenté par
Le Ministère de l'Urbanisme du Logement et
des Transports C.E.T.E.
109, avenue Salvador Allende B.P. 48
F-69672 Bron Cédex(FR)

(72) Inventeur: **Morat, Pierre**
68, rue Saint Dominique
F-75007 Paris(FR)
Inventeur: **Rochet, Louis**
4, rue Clément Ader
F-69500 Bron(FR)

(74) Mandataire: **Ropital-Bonvarlet, Claude et al**
Cabinet BEAU DE LOMENIE 99, Grande rue
de la Guillotière
F-69007 Lyon(FR)

(54) **Procédé et dispositif de détection d'apparition et de quantification d'évolution de fissures à la surface d'un matériau.**

(57) -Procédé et dispositif de détection d'apparition et de quantification d'évolution de fissures à la surface d'un matériau.

-Une mince couche (21) d'une matière réalisée à base de particules conductrices est déposée sur une surface du matériau à étudier. Des contacts (24) sont répartis en différents points de la surface de la couche (21). Certains des contacts (24) servent de contacts (24') d'injection de courant, tandis que d'autres servent de contacts (24") de mesure, les premiers étant raccordés à une source d'alimentation électrique basse tension (51) et les seconds à un connecteur de mesure.

On réalise des séries successives de mesures de résistance apparente de la couche conductrice (21) entre les différents contacts de mesure (24") tandis que le matériau à surveiller est soumis à une contrainte variable induisant une déformation du matériau et on compare les séries successives de mesures de résistance apparente entre elles.

-Application à la surveillance de matériaux soumis à des contraintes internes ou externes conduisant à des déformations des matériaux.

Fig.2

# PROCEDE ET DISPOSITIF DE DETECTION D'APPARITION ET DE QUANTIFICATION D'EVOLUTION DE FISSURES A LA SURFACE D'UN MATERIAU

La présente invention résulte de travaux de l'équipe de recherche du Laboratoire de Géomagnétisme et Paléomagnétisme de l'Institut de Physique du Globe de PARIS, équipe de recherche n° 922 associée au C. N. R. S., effectués en collaboration avec le Laboratoire des Ponts et Chaussées du Centre d'Etudes Techniques de l'Equipement de LYON et concerne le domaine de la mesure de la déformation par contrainte, en traction, compression ou torsion, d'un matériau à partir du domaine élastique en passant par le domaine de fissuration stable pour lequel l'évolution des fissures s'arrête avec la stabilisation de la contrainte, jusqu'au domaine de fissuration instable pour lequel les fissures continuent d'évoluer après la stabilisation de la contrainte et en incluant, au besoin, le terme ultime constitué par la ruine du matériau, c'est-à-dire la détermination du seuil de rupture.

L'invention concerne ainsi les domaines pour lesquels la connaissance de l'évolution d'une charge permet de traduire la tendance à l'évolution de l'état imposé au matériau et s'applique, en particulier, au génie civil, à la géologie, à la construction mécanique, à la construction aéronautique.

L'invention permet, également, à l'inverse, de calculer une charge imposée, à partir de l'observation de l'état du matériau.

La mesure des déformations d'un matériau, en fonction des contraintes appliquées, est réalisée de façon classique à l'aide de jauges d'extensométrie, c'est-à-dire à l'aide de résistances électriques ancrées sur le matériau et dont on mesure la variation de la valeur de la résistance en fonction de l'allongement.

On réalise, également, des mesures de déformation de matériaux à l'aide d'une couche photo-élastique rapportée sur la surface du matériau. Par projection d'une lumière polarisée sur la couche photo-élastique, on peut, en effet, observer, lors de la déformation de ladite couche, des variations de ses propriétés optiques.

Un autre moyen de mesurer la déformation d'un matériau consiste à observer les altérations, par exemple en déphasage, d'une onde acoustique appliquée au matériau.

Les diverses méthodes précédentes présentent toutes l'inconvénient de ne pouvoir fournir des informations que lorsque le milieu est continu, c'est-à-dire sans aucune fissure.

Pour détecter l'apparition de fissures, on utilise couramment des témoins composés de plâtre ou de vernis craquelant qui fournissent une information visuelle de l'apparition des fissures. Un tel moyen ne fournit aucune information avant l'apparition des fissures et, ensuite, ne permet pas de quantifier l'évolution des fissures. L'interprétation visuelle est, en outre, d'autant plus difficile à faire que le réseau de fissures est plus dense.

Il est, par ailleurs, connu d'appliquer des vernis pelables sur le matériau à examiner devant subir des contraintes, de décoller ensuite ce vernis une fois les contraintes appliquées et d'examiner au microscope les modifications subies par la couche de vernis. Un tel procédé permet de réaliser une analyse quantitative, mais nécessite un examen long et minutieux et n'offre pas la possibilité de suivre une évolution en fonction des contraintes appliquées au matériau. Ce procédé ne fournit ainsi que des résultats en différé d'un état à un instant donné, sans aucune appréciation possible en continu.

On connaît encore, par le brevet US 4 149 406, un procédé destiné à déterminer l'évolution en fonction du temps de la longueur d'une fissure lors d'un essai de fracturation sur un échantillon du matériau à tester. Selon ce procédé, on dépose sur une face de l'échantillon une couche d'un matériau conducteur, de telle manière que cette couche conductrice se déchire dans la région de la fissure, on dispose une première paire de contacts de part et d'autre de la région de fissuration pour appliquer un courant électrique à la couche conductrice et une seconde paire de contacts, également de part et d'autre de la région de fissuration pour mesurer, en fonction du temps, des variations de tension qui évoluent en fonction de la longueur de la fissure. Un tel procédé exige de connaître à l'avance, de façon très précise, l'endroit où doit se produire une fissure et ne permet donc, ni d'effectuer une surveillance in situ, ni de détecter et localiser des fissures avant que celles-ci soient visibles.

On a, également, proposé, dans la demande de brevet PCT 83-03 675, un procédé et un dispositif de contrôle de structures métalliques, en vue de détecter, notamment, des fissures, procédé selon lequel un courant électrique est appliqué à la structure métallique et les différences de potentiel entre différents points de contact de la structure sont mesurées, d'une part, dans des conditions initiales où la structure est encore sans défaut et, d'autre part, en cours d'utilisation lorsque la structure est susceptible de comporter des fissures. Des bornes de contact sont fixées sur la structure métallique en étant réparties de façon à peu près uniforme sur la structure métallique, de façon à permettre d'effectuer des contrôles par la mesure de la chute de tension entre des couples choisis de points de contact en différentes zones de la structure. L'injection du courant, directement dans la structure métallique conductrice, réduit cependant fortement la précision et la sensibilité des mesures, ne permet pas d'envisager une modification de l'emplacement des divers contacts et limite, de façon sensible, le temps de réponse lors de la conduite des mesures. Par ailleurs, le procédé décrit dans le document PCT susvisé propose, simplement, d'effectuer un contrôle d'intégrité d'une structure métallique, par référence à un état initial mais ne fournit pas de moyen d'investigation pouvant conduire à l'établissement aisé d'un diagnostic sur l'état global de cette structure avec, notamment, une identification et une localisation de l'ensemble des fissures, susceptibles d'apparaître sous l'effet de contraintes mécaniques.

La présente invention vise à remédier aux inconvénients précités et à assurer, pour un matériau soumis à des contraintes, une surveillance capable de s'étendre à tous les domaines de déformation du matériau, depuis le domaine élastique jusqu'aux domaines de fissuration stable et instable, voire jusqu'à la ruine du matériau.

L'invention a encore pour objet de permettre d'assurer une surveillance superficielle, pouvant être tridimensionnelle, de l'apparition et de l'évolution de fissures sur une surface donnée du matériau.

Ces buts sont atteints grâce à un procédé de détection d'apparition et de quantification d'évolution de fissures à la surface d'un matériau, caractérisé en ce que :

a) on dépose sur une surface du matériau à étudier une mince couche d'une matière réalisée à base de particules conductrices,

b) on associe à ladite couche conductrice une série de contacts répartis en différents points de la surface de ladite couche et reliés chacun à un fil de raccordement,

c) on relie, sélectivement, les fils de raccordement de certains desdits contacts à une source d'alimentation électrique basse tension pour former un ensemble de contacts d'injection de courant et on relie, sélectivement, les fils de raccordement des autres contacts à un connecteur de mesure pour former un ensemble de contacts de mesure, de manière à réaliser une première configuration de contacts d'injection de courant et de contacts de mesure,

d) on réalise des séries successives de mesures de résistance apparente de la couche conductrice entre les différents contacts de mesure selon ladite première configuration, par mesure de l'un des termes de la loi d'Ohm entre des couples de contacts, tandis que le matériau à surveiller est soumis à une contrainte variable induisant une déformation du matériau,

e) on compare lesdites séries successives de mesures de résistance apparente entre elles pour établir, pour ladite première configuration, des variations de résistance apparente entre les différents contacts de mesure qui sont fonction des déformations du matériau,

f) on modifie, dans la série de contacts, la répartition des contacts d'injection de courant et celle des contacts de mesure pour réaliser au moins une autre configuration de contacts d'injection de courant et de contacts de mesure et on réitère les étapes d) et e) pour cette autre configuration.

L'étape f) peut être renouvelée plusieurs fois, la configuration des contacts d'injection de courant et des contacts de mesure étant modifiée à chaque fois.

La configuration des contacts d'injection de courant et des contacts de mesure peut être modifiée, successivement, selon un programme préétabli à l'avance ou de façon auto-adaptative en tenant compte des résultats des mesures des variations de résistance apparente entre les différents contacts de mesure pour les configurations de contacts ayant déjà donné lieu à des séries de mesures.

Selon une première application possible, une série de mesures de résistance apparente est réalisée en l'absence de contrainte mécanique extérieure, puis des séries successives de mesures de résistance apparente sont réalisées tandis que l'on applique au matériau une contrainte extérieure progressivement variable.

Selon une seconde application possible, des séries successives de mesures de résistance apparente sont réalisées en l'absence de contrainte mécanique extérieure, le matériau étant lui-même soumis à des contraintes internes, telles que des contraintes thermiques ou de fluage.

Selon encore une troisième application possible, des séries successives de mesures de résistance apparente sont réalisées tandis que l'on soulage progressivement une contrainte de charge précédemment appliquée au matériau.

La couche conductrice doit être très mince pour assurer un temps de réponse rapide et peut présenter une épaisseur comprise entre environ un micron et environ 5 mm.

Pour former une barrière anti-humidité et/ou une couche isolante électriquement, pour le cas où le matériau à étudier est conducteur, on peut déposer d'abord sur le matériau à étudier une couche intermédiaire pouvant être un vernis craquelant et déposer, ensuite, la mince couche conductrice sur la couche intermédiaire.

La couche conductrice peut être réalisée sur une surface quelconque du matériau à étudier, par exemple sur une surface plane ou une surface cylindrique.

Selon un mode de réalisation particulier, on forme un trou cylindrique débouchant dans le matériau à étudier et l'on réalise au moins un capteur semi-cylindrique de détection de fissure par dépôt d'une couche conductrice sur la paroi interne du trou cylindrique et incorporation de contacts dans ladite couche conductrice.

Selon une mise en oeuvre particulière du procédé selon l'invention, on réalise un premier capteur témoin de détection de fissure par dépôt d'une mince couche conductrice sur une surface d'un échantillon du matériau à étudier, adjonction à ladite couche conductrice d'une série de contacts de mesure de courant et d'une série de contacts d'injection de courant, ces derniers constituant une paire d'électrodes, on réalise une première série de référence de mesures de résistance apparente de la couche conductrice entre les différents contacts du premier capteur témoin dans des conditions de contrainte prédéterminées, on réalise un second capteur de détection de fissure identique au premier capteur témoin, mais réalisé in situ sur une surface du matériau à surveiller et on réalise des séries successives de mesures de résistance apparente de la couche conductrice entre les différents contacts du second capteur, on compare en permanence lesdites séries successives de mesures de résistance apparente à ladite première série de référence et on détecte les variations de résistance apparente supérieures à un seuil prédéterminé.

L'invention concerne, également, un dispositif de détection de fissures à la surface d'un matériau, caractérisé en ce qu'il comprend un capteur de mesure constitué par une mince couche d'une matière réalisée à partir de particules conductrices et déposée sur une surface du matériau à surveiller, une série de contacts répartis à la surface de ladite couche et divisés en un premier ensemble de contacts d'injection de courant reliés, sélectivement, par des fils de raccordement à une source d'alimentation électrique basse tension et en un second ensemble de contacts de mesure reliés, sélectivement, par des fils de raccordement à un connecteur de mesure, des moyens de mesure de la résistance apparente entre les différentes combinaisons de paires de contacts de mesure et de comparaison des valeurs mesurées avec des valeurs de référence ou des valeurs précédemment mesurées et des moyens de commutation pour modifier au sein du capteur la configuration de la répartition des contacts en contacts d'injection de courant et contacts de mesure.

D'autres caractéristiques et avantages de l'invention ressortiront de la description suivante de modes particuliers de réalisation de l'invention, en référence aux dessins annexés sur lesquels :

-la **fig. 1** est une vue schématique montrant un dispositif de détection d'apparition de fissure réalisé conformément à l'invention,

-la **fig. 2** représente une vue schématique de face d'un exemple de capteur plan pouvant être utilisé pour la mise en oeuvre du procédé selon l'invention,

-la **fig. 3** est une vue partielle agrandie d'une partie du dispositif de la **fig. 1** montrant une variante de réalisation d'un capteur,

-la **fig. 4** représente une vue en perspective d'un capteur cylindrique pouvant être utilisé dans un dispositif selon l'invention,

-les **fig. 5** et **6** montrent, vus en perspective, deux autres modes particuliers de réalisation d'un dispositif selon l'invention,

-les **fig. 7A à 7D** montrent quatre variantes de réalisation du capteur plan de la **fig. 2**, et,

-la **fig. 8** représente le schéma fonctionnel d'un exemple de système de traitement des informations fournies par un capteur de mesure selon l'invention.

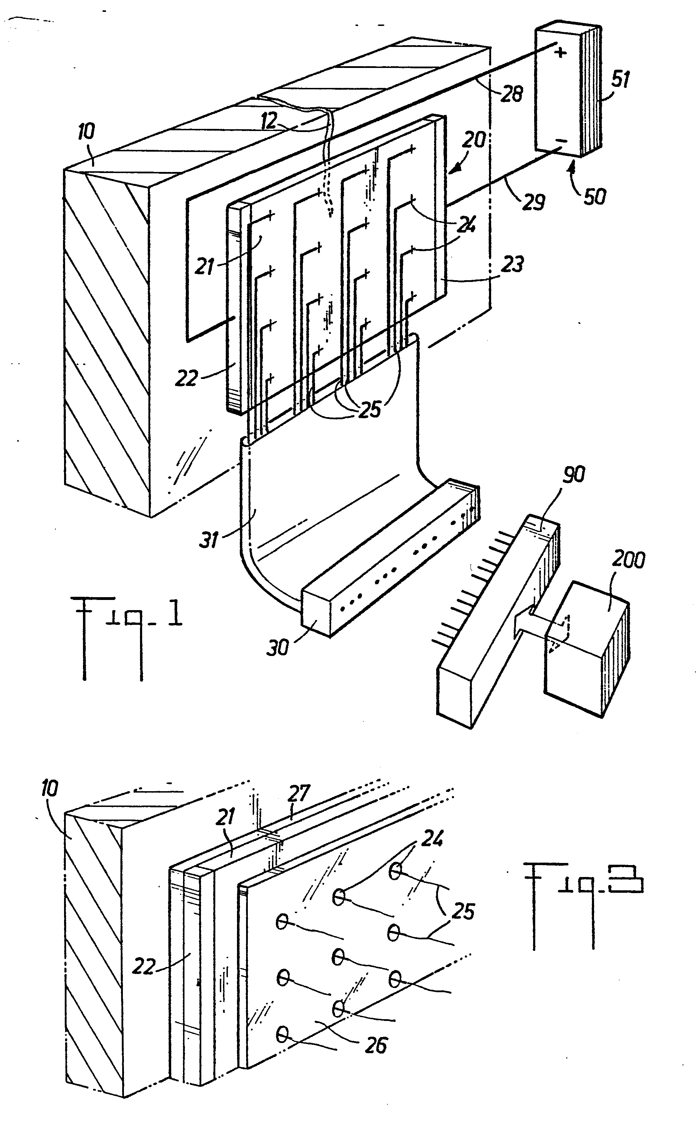

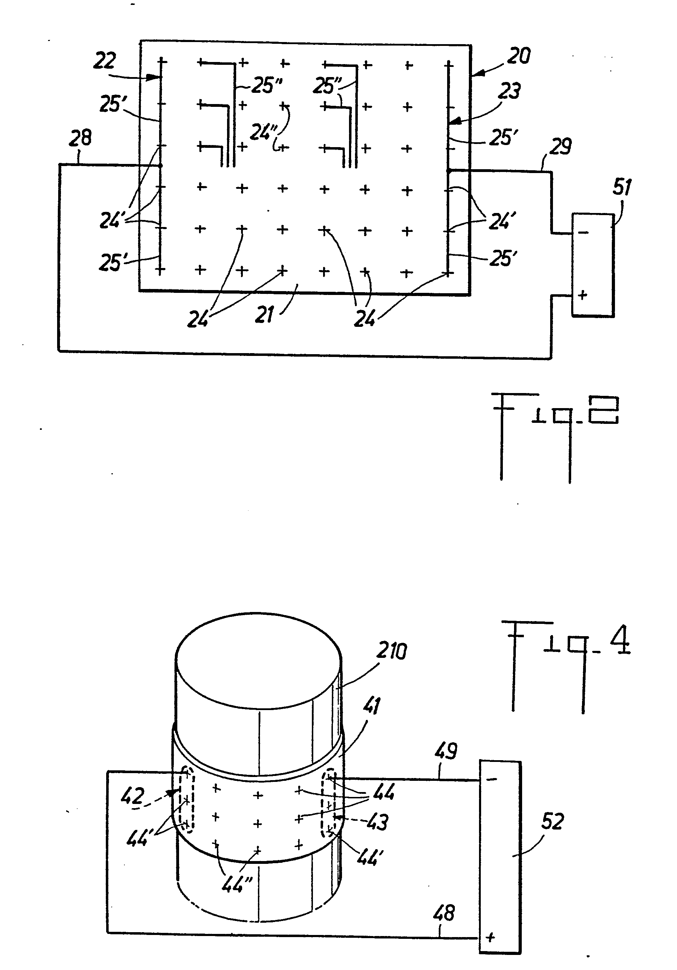

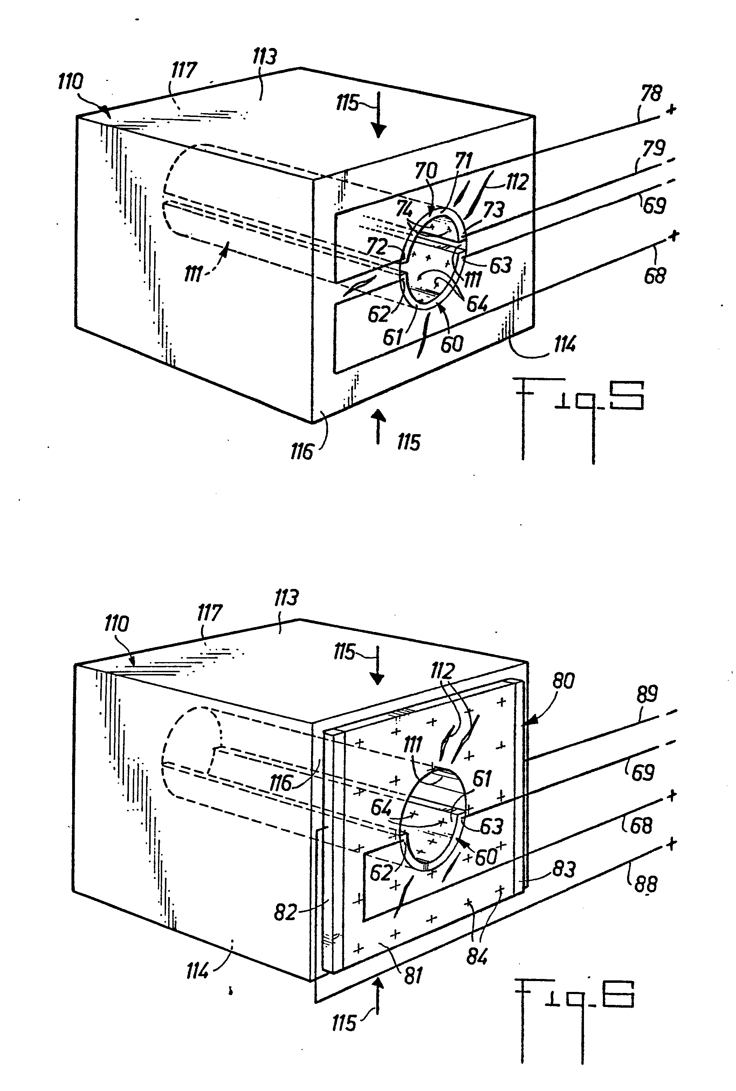

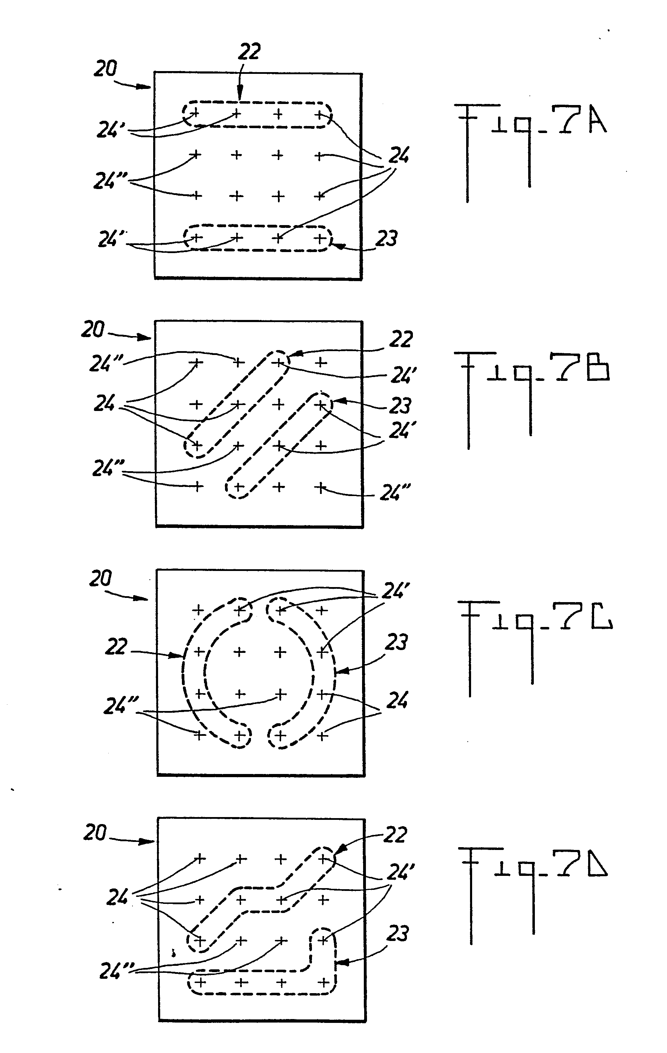

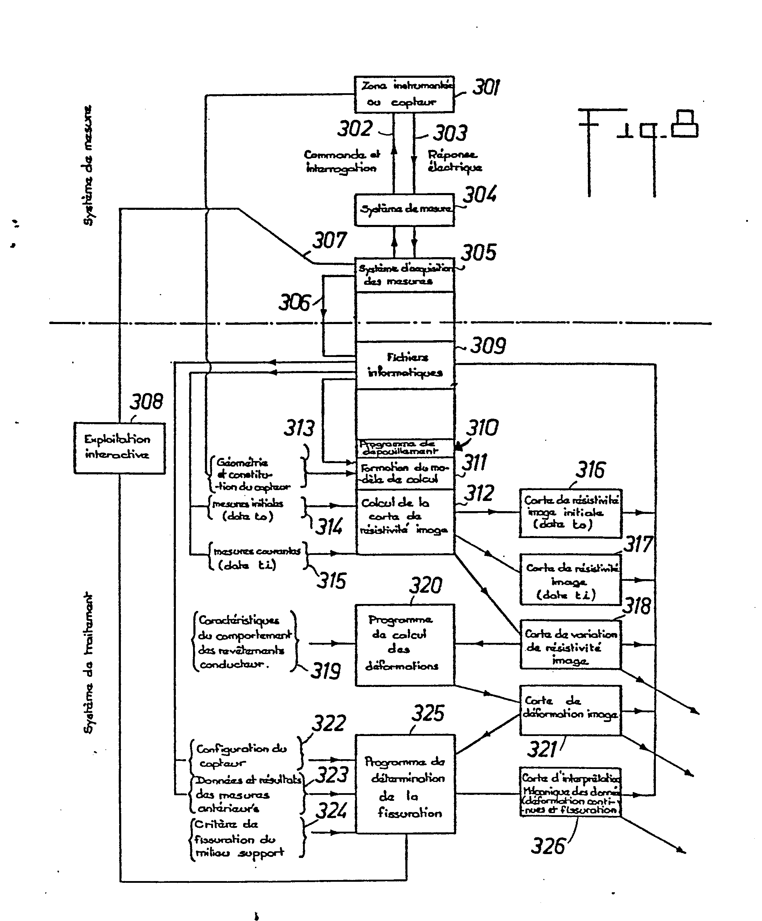

Le procédé selon l'invention permet l'étude, à la fois, de la répartition des déformations dans un matériau 10 (**fig. 1** et **3**), 110 (**fig. 5** et **6**) ou 210 - (**fig. 4**) et de l'évolution de la fissuration de la mise sous contrainte à la ruine de l'échantillon **10, 110, 210**. On considérera, dans la suite de la description, sauf indication contraire, le cas d'un échantillon **10, 110, 210** constituant une éprouvette sur laquelle est effectuée la surveillance de l'apparition des fissures et, d'une manière générale, le contrôle de l'évolution des déformations, en fonction des contraintes exercées sur l'éprouvette. Toutefois, le procédé est également applicable à la réalisation de mesures sur des matériaux in situ au sein d'une structure soumise à des contraintes extérieures, ainsi qu'au cas d'un matériau soumis à des contraintes internes, telles que des contraintes thermiques ou de fluage, ainsi qu'au cas d'un matériau déjà soumis à une charge et que l'on soulage pendant la conduite des mesures.

Selon l'invention, un capteur **20** (**fig. 1**) comprend, essentiellement, une mince couche conductrice **21** qui est déposée sur une surface de l'échantillon **10** et un dispositif **50, 200** est adjoint au capteur **20** pour suivre l'évolution de la résistance apparente de la mince couche conductrice **21** à travers des mesures de l'un des termes de la loi d'Ohm.

La couche conductrice **21**, qui peut présenter une épaisseur comprise entre environ un micron et cinq millimètres, est déposée directement sur le matériau de base **10** si celui-ci est isolant, par exemple, s'il s'agit d'une roche sèche. Ceci permet d'obtenir une adhérence optimale entre la couche conductrice 21 et le matériau support 10. Toutefois, dans le cas d'un matériau 10 conducteur ou humide, il convient d'intercaler une couche isolante intermédiaire 27 entre la mince couche conductrice 21 et le matériau 10 (fig. 3). Cette couche isolante 27 peut être constituée, par exemple, par un vernis craquelant, en cas de matériau conducteur et par un film de matière isolante et élastique dans le cas d'un matériau humide.

La mince couche conductrice 21 peut être réalisée à partir de particules conductrices déposées par pulvérisation sous vide. Toutefois, en pratique, la couche conductrice 21 comprend, de préférence, des particules conductrices associées à un solvant et à un liant et se trouve appliquée à la brosse ou par pulvérisation sous haute pression, pour les plus faibles épaisseurs, alors que, pour les autres épaisseurs supérieures à quelques centaines de microns, la couche conductrice 21 est constituée sous forme d'un produit élaboré en feuille. Les particules conductrices sont, avantageusement, de graphite, mais peuvent être en or, en argent, en cuivre ou en un autre matériau bon conducteur de l'électricité.

Deux électrodes 22, 23 sont raccordées, par exemple par collage, à la mince couche conductrice 21 , de part et d'autre de celle-ci, et sont raccordées par des fils 28, 29 à une source d'alimentation électrique basse tension 51 Le choix d'une basse tension permet d'éviter un échauffement exagéré de la couche conductrice 21, tout en garantissant une sécurité pour l'opérateur. Par ailleurs, la source 51 peut être une source de courant continu, comme représenté sur la fig. 1 ou, dans le cas où, par exemple, il est nécessaire d'éviter les risques de phénomènes d'électrolyse en présence d'eau, une source de courant alternatif.

Des contacts indépendants 24, représentés symboliquement par des croix sur le dessin, sont implantés dans la couche conductrice 21 ou rapportés sur ou sous celle-ci et sont répartis en diverses zones de la surface de la couche conductrice 21 . Chaque contact 24 est raccordé par un fil de liaison 25 à un connecteur commun 30 sur lequel peut venir s'embrocher un connecteur 90 de liaison à un dispositif 200 de mesure et d'exploitation des signaux disponibles entre les différents contacts 24 lorsque des électrodes 22, 23 sont raccordées à la source d'alimentation 51. Le dispositif 200 constitue, essentiellement, une chaîne de mesure, directe ou indirecte, de la résistance apparente de la couche conductrice 21 entre diverses combinaisons de couples de contacts 24 . La chaîne de mesure 200 comprend, également, un dispositif de comparaison pour comparer diverses séries de mesures de l'un des termes de la loi d'Ohm effectuées entre diverses combinaisons déterminées de couples de contacts 24 à des instants correspondant à l'application de contraintes données sur l'échantillon de matériau 10 et une série de mesures constituant une matrice de référence, effectuées entre lesdites diverses combinaisons déterminées de couples de contacts à l'état initial de repos du matériau 10, c'est-à-dire en l'absence de toute contrainte extérieure. L'établissement de la matrice de référence, qui correspond à un état de référence du dispositif, peut être effectué sur un échantillon de référence, tandis qu'un capteur 20 identique à celui utilisé pour l'étalonnage du dispositif peut ensuite être utilisé in situ pour étudier l'évolution de la résistance apparente de la couche conductrice 21 du capteur lorsque celui-ci est placé sur un matériau soumis à des contraintes. Il est, toutefois, parfaitement possible de n'effectuer que des comparaisons entre elles des diverses séries de mesures de l'un des termes de la loi d'Ohm effectuées entre diverses combinaisons de couples de contacts 24, sans procéder à des comparaisons avec une matrice de référence.

La fig. 2 montre un exemple de distribution de contacts 24 au sein d'une couche conductrice 21 d'un capteur plan 20. La fig.2 montre un réseau régulier de contacts 24 répartis en rangées et colonnes pour former un ensemble relativement dense de contacts permettant d'observer, de façon très précise, l'apparition de fissures sur toute la surface de la couche 21 et de suivre, de façon très fine, l'évolution des fissures produites. Naturellement, le capteur 20 peut être adapté pour épouser une surface non plane et peut présenter une forme différente de celle d'un carré ou d'un rectangle. De même, la répartition des contacts 24 dans la couche conductrice 21 peut être adaptée au type de matériau support 10 à étudier.

Sur la fig. 2, on voit que les contacts 24 sont, en fait, répartis en un premier ensemble 22, 23 de contacts 24' d'injection de courant, dont les fils de liaison 25' sont reliés à la source d'alimentation électrique 51 et en un second ensemble de contacts 24" de mesure, dont les fils de liaison 25" sont reliés à un connecteur de mesure tel que le connecteur 30 de la fig. 1.

Dans ce cas, le premier ensemble de contacts 24' d'injection de courant peut comporter deux rangées latérales de contacts 24 alignés et reliés ensemble par des liaisons 25' pour constituer l'équivalent des deux barrettes latérales constituant les électrodes 22, 23 de la fig. 1, raccordées à la source d'alimentation 51 par des fils de liaison 28, 29. Les autres contacts 24" de la matrice de contacts **24** sont reliés par des fils de liaison indépendants **25"** au connecteur **30** de façon tout-à-fait analogue à l'ensemble des contacts **24** de la **fig. 1.**

Le fait de réaliser l'injection de courant, à partir d'un ensemble de contacts **24'** qui fait partie de la matrice initiale de contacts indépendants **24**, présente l'avantage de permettre de réaliser facilement, lors d'une même campagne de mesures, des électrodes **22, 23** de forme et de localisation différentes, sans changer la structure de base du capteur **20**.

Ainsi, on a représenté sur les **fig. 7A à 7D** des configurations du capteur **20** qui constituent des variantes de réalisation du capteur de la **fig.2.** Sur ces **fig. 7A à 7D**, chaque sous-ensemble de contacts **24'**, relié à un pôle de la source d'alimentation électrique, est entouré de pointillés et identifié par la référence **22** ou **23** qui correspond à une électrode **22** ou **23** des **fig. 1 et 2.**

Sur la **fig. 7A**, les électrodes **22, 23** sont constituées par deux rangées horizontales supérieure et inférieure de contacts **24'**.

Sur la **fig. 7B**, les électrodes **22, 23** sont constituées par des contacts **24'** qui définissent deux alignements parallèles de contacts, constitués par des diagonales de la matrice de contacts.

Sur la **fig. 7C**, les électrodes **22, 23** sont constituées par des contacts **24'** répartis selon, sensiblement, deux demi-lunes.

La **fig. 7D** montre, enfin, un exemple plus particulier d'électrodes **22, 23**, de formes différentes et constituées de lignes brisées, pour une application à des cas spécifiques.

D'autres variantes de réalisation d'électrodes **22, 23** peuvent, naturellement, être envisagées, à partir de la matrice de contacts **24**, afin de rechercher et suivre au mieux toute direction de fissure. Des formes géométriques différentes d'électrodes **22, 23** peuvent facilement être réalisées par commutation entre les divers fils de liaison **25** des contacts **24** qui peuvent être reliés, soit à la source de courant **50**, soit au dispositif de mesure **200**.

Les contacts **24** peuvent être constitués par de petits picots métalliques implantés individuellement dans la couche conductrice **21** ou plaqués sur celle-ci. Selon une variante de réalisation, représentée sur la **fig. 3**, les contacts **24** peuvent être intégrés dans une couche isolante **26** qui est rapportée sur la couche conductrice **21**. La couche isolante **26**, qui peut présenter la forme d'une grille ou d'un réseau maillé, permet d'isoler les contacts **24** entre eux tout en maintenant des positions respectives prédéterminées entre les différents contacts **24**. Lorsque la couche isolante **26** est rapportée sur la couche conductrice **21**, les contacts **24**, qui affleurent au verso de la couche isolante **26**, peuvent être intégrés à la couche conductrice **21**.

Le procédé de mesure selon l'invention permet de réaliser des mesures à un faible coût et, surtout, s'adapte à des surfaces de dimensions et de formes très variées, dans la mesure où la couche conductrice **21** est déposée ou rapportée directement sur le matériau **10** à examiner.

A titre de second exemple, on a montré sur la **fig. 4** un capteur **40** dont la structure est semblable à celle du capteur plan **20** précédemment décrit, mais qui est adapté à la surface cylindrique d'un pilier **210**.

Le capteur **40** comporte une couche conductrice **41** rapportée sur la face externe du pilier **210**. La couche conductrice **41**, qui peut être réalisée de la même façon que la couche conductrice **21**, mais présente, de préférence, une structure élastique et une épaisseur comprise entre environ quelques centaines de microns et cinq millimètres. Le capteur **40** présente deux électrodes **42, 43** isolées l'une de l'autre et reliées chacune par un fil de liaison **48, 49** à une source d'alimentation basse tension **52** semblable à la source d'alimentation **51**. Des contacts métalliques **44**, correspondant aux contacts **24** du capteur **20**, sont répartis sur la surface conductrice cylindrique **41**. Des contacts **44"** sont reliés par des fils de liaison, non représentés, analogues aux fils **25**, à un connecteur analogue au connecteur **30** sur lequel peut venir s'embrocher un connecteur tel que le connecteur **90** assurant une liaison avec un dispositif **200** de mesure et d'exploitation des signaux disponibles entre les différents contacts **44"** lorsque les électrodes **42, 43** sont raccordées à la source d'alimentation **52**, les électrodes **42, 43** pouvant être réalisées elles-mêmes à partir de sous-ensembles de contacts **44'**, comme pour un capteur plan.

Les **fig. 5 et 6** illustrent deux autres modes particuliers de réalisation de l'invention pour la détection d'apparition et la quantification d'évolution de fissures **112** au sein d'un bloc de matériau **110** au sein duquel on a réalisé un trou cylindrique **111** traversant l'échantillon de matériau **110** de part en part. L'échantillon **110** peut être, par exemple, un bloc parallélépipédique présentant quelques dizaines de millimètres dans chacune de ses dimensions, mais la taille de l'échantillon dépend, naturellement, de l'application envisagée et pourrait être beaucoup plus importante. L'invention s'applique, cependant, bien à des échantillons **110** de relativement petite taille percés d'orifices **111** de section réduite. Par exemple, dans le cas d'un bloc **110** présentant un volume de l'ordre de 200 à 250 cm$^3$, le trou central **111** peut présenter un diamètre de l'ordre de 20 mm.

Des mesures de résistance apparente peuvent être effectuées à partir des capteurs 60, 70 ou 60, 80 placés sur l'échantillon 110, tandis que des contraintes uniaxiales (ou pluri-axiales) de valeurs prédéterminées sont appliquées sur les faces supérieure et inférieure 113, 114 de l'échantillon, selon la direction des flèches 115 , ou sur d'autres faces opposées, perpendiculairement à ces faces. De la sorte, il est possible d'observer, de façon qualitative et quantitative, l'évolution de l'état de fissuration en fonction du temps et de la contrainte appliquée.

Sur le mode de réalisation de la fig. 5, au lieu d'un capteur cylindrique unique adapté à la surface cylindrique d'un trou, qui serait envisageable d'une façon analogue au capteur 40 adapté à un pilier, on utilise deux capteurs semi-cylindriques 60, 70 déposés sur la paroi interne du trou 111 symétriquement par rapport à un plan diamétral perpendiculaire aux faces 113, 114 de l'échantillon parallélépipédique 110 et parallèle au sens d'application des contraintes exercées selon les flèches 115. Les capteurs semi-cylindriques 60, 70 présentent chacun une couche conductrice 61, 71, une paire d'électrodes 62, 63 ; 72, 73, une série de contacts de mesure 64, 74, une paire de fils de liaison 68, 69 ; 78, 79 reliant les électrodes à une source d'alimentation basse tension, et un ensemble de fils de connexion, non représentés, pour relier les contacts 64, 74 à un connecteur de liaison à un bloc de traitement électronique. La réalisation d'un ensemble de capteurs 60, 70, présentant des symétries, par exemple des symétries par rapport à deux plans perpendiculaires, permet d'augmenter la sensibilité des mesures.

Sur la fig. 6, on a représenté un bloc de matériau 110 semblable à celui de la fig. 5 avec au moins un capteur semi-cylindrique 60 , tel que celui de la fig. 5, mais un capteur plan supplémentaire 80 est déposé sur au moins l'une des faces frontales 116, 117 du bloc 110. Le capteur 80, avec sa couche conductrice 81, ses électrodes 82, 83, reliées à des fils de connexion 88, 89, et son réseau de contacts de mesure 84, est semblable au capteur 20 de la fig. 1, mais est exécuté de manière à être réparti autour de l'orifice 111 réalisé dans le bloc 110 pour augmenter les symétries du dispositif de détection.

Les différentes mises en oeuvre du procédé selon l'invention, qui consistent à suivre les variations de résistance entre différents couples de contacts répartis sur une couche conductrice déposée sur le matériau à tester, en fonction du temps et des contraintes appliquées au matériau, ont permis de mettre en évidence des correspondances entre les variations de résistance détectées et les déformations mécaniques du matériau testé, dans plusieurs domaines de mesure, en fonction de l'évolution de la fissuration.

Le procédé selon l'invention, qui permet de suivre l'évolution des déformations dès la mise sous contrainte et de continuer celle-ci même lors de l'apparition de fissuration, peut ainsi s'appliquer à des domaines très divers qui impliquent, d'une manière générale, une étude de résistance des matériaux.

On notera que, dans le suivi du phénomène de fissuration, compte tenu de l'existence, au sein des capteurs 20, 40, 60, 70, 80, d'un réseau maillé de contacts, il est possible de suivre le phénomène simultanément ou successivement entre des couples de contact de mailles différentes, pouvant, éventuellement, se recouvrir, et de faire évoluer la maille de mesure en fonction des mesures antérieures, à partir du bloc de traitement 200, selon un programme préétabli ou auto-adaptatif.

Par commutations successives de différents contacts pris en compte en tant que contacts d'injection de courant ou contacts de mesure, il est possible de modifier la zone d'étude circonscrite et d'approcher et détecter une fissure qui, sans ces modifications successives des zones étudiés ne serait que faiblement perceptible autrement, compte tenu de sa direction par rapport au réseau de contacts. L'invention permet ainsi de réaliser de façon très précise une carte complète de la fissuration au sein du matériau observé en déterminant l'orientation, la position et le développement des différentes fissures détectées.

Des dispositifs d'alarme peuvent, naturellement, être adjoints au bloc de traitement 200 pour délivrer un signal particulier lorsqu'un seuil donné de fissuration a été atteint au sein du matériau testé.

On décrira, maintenant, en référence à la fig. 8, la façon dont le procédé selon l'invention peut être mis en oeuvre par un opérateur ou à l'aide d'un programme de traitement.

Comme cela a déjà été exposé plus haut, le dispositif de mesure proprement dit comprend un capteur 301 constitué par un revêtement conducteur équipé de contacts et de connexions, lequel capteur est placé sur un mileu support à examiner. Des circuits 304 de mesure sont associés au capteur 301, pour assurer, par des lignes 302, l'alimentation du capteur 301, la configuration à distance du capteur 301, c'est-à-dire la sélection des contacts devant servir de contacts d'injection de courant et la sélection des contacts devant servir de contacts de mesure et l'interrogation du capteur 301 et, par les lignes 303, la réception et la mesure des grandeurs électriques fournies par le capteur 301 en réponse aux interrogations. Un système

305 d'acquisition de données complète le système de mesure pour assurer le pilotage du système de mesure et l'enregistrement des mesures, par exemple pour transmettre celles-ci à des fichiers informatiques 309.

Un système de traitement, complétant le système de mesure proprement dit, est constitué par un ensemble de programmes informatiques qui permettent un traitement rapide et efficace des informations fournies par le capteur.

Le système de traitement comprend ainsi un ensemble de fichiers 309 permettant le stockage et la sauvegarde :

-des données relatives aux séries de mesures successives,

-des résultats intermédiaires résultant du traitement des mesures,

-des résultats finals du traitement des mesures.

Ces fichiers comportent l'archivage de toutes les données nécessaires pour permettre une réexploitation ultérieure des mesures.

Le système de traitement contrôle le transfert des données du système d'acquisition 305 vers les fichiers informatiques 309.

Le système de traitement met en oeuvre un programme de dépouillement 310.

Ce programme assure la transformation des mesures électriques fournies par le système de mesure en une carte de résistivité image suivant un modèle de représentation du capteur. Ce programme comporte deux étapes principales :

-la formation du modèle numérique (étape 311) comportant l'introduction des données (313 et 322) relatives, respectivement, à la constitution du capteur (caractéristiques géométriques et électriques) et à sa configuration (contacts d'injection et de mesure),

-le calcul de la carte de résistivité image (étape 312). Ce sous-programme calcule à partir d'une série de mesures électriques une distribution de résistivité équivalente dite carte de résistivité image, suivant le modèle maillé défini pour la représentation du capteur.

Le programme de traitement fournit, à partir des mesures initiales 314 (date to), une carte de résistivité image initiale (316). Celle-ci est stockée dans les fichiers informatiques 309 et constitue l'état de référence du capteur. Il peut être établi plusieurs cartes de l'état initial correspondant à des configurations différentes du capteur (combinaisons différentes des contacts d'injection et de mesure). De même, à partir des séries de mesures successives 315 (date ti), le programme calcule les cartes

317 de résistivité image correspondantes qui sont archivées dans les fichiers informatiques 309. Pour chaque date ti, il peut être calculé plusieurs cartes de résistivité image correspondant aux différentes configurations mesurées du capteur.

Les cartes de résistivité image 317 constituent un résultat intermédiaire qui peut être édité sur un traceur graphique ou visualisé sur un écran.

A partir des cartes 316 de résistivité image initiales (to) et des cartes homologues 317 à la date ti, le programme permet de calculer les cartes 319 de variation de résistivité image (ti -to). Celles-ci constituent les résultats principaux du programme de dépouillement 310. Leur stockage et leur édition sont effectués dans les mêmes conditions que pour les cartes de résistivité image.

Le système de traitement met ensuite en oeuvre un programme 320 de calcul des déformations.

Ce programme 320 calcule, à partir des cartes 318 de variation de résistivité image (ti -to) des cartes 321 de déformations équivalentes appelées cartes de déformation image suivant le modèle géométrique du capteur défini par le programme de dépouillement. Le calcul des cartes 321 de déformation image nécessite l'introduction de données 319 relatives aux caractéristiques électriques et mécaniques du revêtement conducteur du capteur 301.

Les résultats du programme de calcul 320 sont édités sous forme de cartes 321 de déformation image (ti -to) sur traceur graphique ou écran de visualisation et archivées dans les fichiers informatiques 309.

Le système de traitement comprend, en outre, un programme 325 de détermination de la fissuration.

Ce programme 325 permet de déterminer, à partir des cartes de déformation image 321, une carte 326 d'interprétation mécanique des données en terme de déformation continue et de fissuration. Cette interprétation est effectuée à partir de la carte de déformation image 321 et en prenant en compte les données relatives à :

-la ou les configurations 322 du capteur 301,

-les données et résultats 323 des mesures antérieures,

-le critère 324 de fissuration du milieu support.

Les résultats sont fournis sous forme d'une carte 326 d'interprétation des déformations continues et de la fissuration à la date ti. Comme pour les cartes précédentes, l'édition de la carte d'interprétation 326 est effectuée sur traceur graphique ou sur écran de visualisation et son stockage assuré dans les fichiers informatiques.

Le système de traitement comporte une possibilité d'exploitation intéractive 308 permettant d'agir sur le système de mesure 305 par une ligne 307 pour modifier la configuration du capteur 301 en cours d'expérience.

**Revendications**

1 -Procédé de détection d'apparition et de quantification d'évolution de fissures à la surface d'un matériau,

caractérisé en ce que :

a) on dépose sur une surface du matériau à étudier (10 ) une mince couche (21) d'une matière réalisée à base de particules conductrices,

b) on associe à ladite couche conductrice (21) une série de contacts (24) répartis en différents points de la surface de ladite couche (21 ) et reliés chacun à un fil de raccordement (25),

c) on relie, sélectivement, les fils de raccordement ( 25') de certains (24') desdits contacts - (24) à une source d'alimentation électrique basse tension (51, 52) pour former un ensemble de contacts d'injection de courant (24') et on relie, sélectivement, les fils de raccordement (25" ) des autres contacts (24") à un connecteur de mesure ( 30)pour former un ensemble de contacts de mesure (24" ), de manière à réaliser une première configuration de contacts d'injection de courant - (24') et de contacts de mesure (24"),

d) on réalise des séries successives de mesures de résistance apparente de la couche conductrice (21) entre les différents contacts de mesure (24") selon ladite première configuration, par mesure de l'un des termes de la loi d'Ohm entre des couples de contacts (24"), tandis que le matériau à surveiller est soumis à une contrainte variable induisant une déformation du matériau,

e)on compare lesdites séries successives de mesures de résistance apparente entre elles pour établir, pour ladite première configuration, des variations de résistance apparente entre les différents contacts de mesure (24") qui sont fonction des déformations du matériau,

f) on modifie, dans la série de contacts (24), la répartition des contacts d'injection de courant (24) et celle des contacts de mesure (24") pour réaliser au moins une autre configuration de contacts d'injection de courant (24') et de contacts de mesure - (24") et on réitère les étapes d) et e) pour cette autre configuration.

2 -Procédé selon la revendication 1, caractérisé en ce que l'on renouvelle l'étape f)plusieurs fois en modifiant à chaque fois la configuration des contacts d'injection de courant (24') et des contacts de mesure (24").

3 -Procédé selon la revendication 1 ou la revendication 2, caractérisé en ce que l'on modifie, successivement, la configuration des contacts d'injection de courant (24') et des contacts de mesure (24") selon un programme pré-établi à l'avance.

4 -Procédé selon la revendication 1 ou la revendication 2, caractérisé en ce que l'on modifie, successivement, la configuration des contacts d'injection de courant (24') et des contacts de mesure (24") de façon auto-adaptative en tenant compte des résultats des mesures des variations de résistance apparente entre les différents contacts de mesure (24") pour les configurations de contacts ayant déjà donné lieu à des séries de mesure.

5-Procédé selon l'une quelconque des revendications 1 à 4, caractérisé en ce que l'on dépose d'abord sur le matériau à étudier (10) une couche intermédiaire formant une barrière anti-humidité et en ce que l'on dépose ensuite la mince couche conductrice (21) sur ladite couche intermédiaire - (27).

6 -Procédé selon l'une quelconque des revendications 1 à 5, caractérisé en ce que l'on dépose d'abord sur le matériau à étudier (10) une couche de vernis craquelant (27) formant isolant électrique et en ce que l'on dépose ensuite sur ledit vernis craquelant (27) la mince couche conductrice (21).

7 -Procédé selon l'une quelconque des revendications 1 à 6, caractérisé en ce que l'on réalise un ensemble de contacts (24) portés par un réseau maillé isolant (26) et en ce que l'on intègre les contacts ( 24) à la couche conductrice (21) par superposition du réseau maillé (26) à la couche conductrice ( 21).

8 -Procédé selon l'une quelconque des revendications 1 à 7, caractérisé en ce que la couche conductrice (21) présente une épaisseur comprise entre environ un micron et environ 5 millimètres.

9 -Procédé selon l'une quelconque des revendications 1 à 8, caractérisé en ce que la couche conductrice (21) est constituée de particules conductrices déposées par pulvérisation sur le matériau à surveiller.

10 -Procédé selon l'une quelconque des revendications 1 à 8, caractérisé en ce que la couche conductrice (21) comprend des particules conductrices incorporées à un solvant et à un liant.

11 -Procédé selon l'une quelconque des revendications 1 à 10, caractérisé en ce que, pour chaque configuration de contacts, le nombre de contacts d'injection de courant (24') est supérieur à deux.

12 -Procédé selon l'une quelconque des revendications 1 à 11, caractérisé en ce que l'on forme un trou cylindrique débouchant (111) dans le matériau à étudier (110) et l'on réalise deux capteurs semi-cylindriques (60, 70) de détection de fissure, par dépôt d'une couche conductrice (61) sur la paroi interne du trou cylindrique (111) et incorporation de contacts (64) dans ladite couche conductrice (61 ) pour établir des variations de résistivité entre les différents contacts (64, 74) des capteurs semi-cylindriques (60, 70 ) et en ce que les deux capteurs semi-cylindriques (60, 70 ) sont symétriques par rapport à un plan selon lequel on exerce des contraintes mécaniques sur le matériau (110).

13 -Procédé selon l'une quelconque des revendications 1 à 11, caractérisé en ce que l'on forme un trou cylindrique débouchant (111 ) dans le matériau à étudier (110), on réalise au moins un capteur semi-cylindrique (60) de détection de fissure par dépôt d'une couche conductrice (61) sur la paroi interne du trou cylindrique (111) et incorporation de contacts (64) dans ladite couche conductrice (61), et l'on réalise, en plus du capteur semi-cylindrique (60) de détection de fissure, un capteur plan (80) de détection de fissure par dépôt d'une couche conductrice (81) sur une face du matériau (110) perpendiculaire au trou cylindrique - (111), symétriquement par rapport audit trou (111) et incorporation de contacts (84) répartis dans la couche conductrice plane (81).

14 -Procédé selon l'une quelconque des revendications 1 à 13, caractérisé :

-en ce que l'on réalise un premier capteur témoin - (20) de détection de fissure par dépôt d'une mince couche (21) conductrice sur une surface d'un échantillon du matériau (10) à étudier, adjonction à ladite couche conductrice (21) d'une série de contacts (24" ) de mesure de courant et d'une série de contacts (24') d'injection de courant, ces derniers constituant une paire d'électrodes (22, 23),

-en ce que l'on réalise une première série de référence de mesures de résistance apparente de la couche conductrice (21) entre les différents contacts (24) du premier capteur témoin ( 20) dans des conditions de contrainte prédéterminées,

-en ce que l'on réalise un second capteur (20') de détection de fissure identique au premier capteur témoin (20) mais réalisé in situ sur une surface du matériau (10) à surveiller et,

-en ce que l'on réalise des séries successives de mesures de résistance apparente de la couche conductrice (21) entre les différents contacts (24') du second capteur (20'),

-en ce que l'on compare en permanence lesdites séries successives de mesures de résistance apparente à ladite première série de référence et,

-en ce que l'on détecte les variations de résistance apparente supérieures à un seuil prédéterminé.

15-Dispositif de détection de fissures au sein d'un matériau pour la mise en oeuvre du procédé selon l'une quelconque des revendications 1 à 14,

caractérisé en ce qu'il comprend un capteur de mesure (20) constitué par une mince couche (21) d'une matière réalisée à partir de particules conductrices et déposée sur une surface du matériau à surveiller, une série de contacts (24) répartis à la surface de ladite couche (21 ) et divisés en un premier ensemble de contacts d'injection de courant (24') reliés sélectivement par des fils de raccordement (25') à une source d'alimentation électrique basse tension (51, 52) et en un second ensemble de contacts de mesure (24") reliés sélectivement par des fils de raccordement - (25") à un connecteur de mesure (30), des moyens (90, 200) de mesure de la résistance apparente entre les différentes combinaisons de paires de contacts de mesure (24") et de comparaison des valeurs mesurées avec des valeurs de référence ou des valeurs précédemment mesurées et des moyens de commutation pour modifier au sein du capteur la configuration de la répartition des contacts (24) en contacts d'injection de courant (24') et contacts de mesure (24").

Fig. 1

Fig. 3

Fig. 2

Fig. 4

Fig.5

Fig.6

Fig.7A

Fig.7B

Fig.7C

Fig.7D

Fig.8

Système de mesure

Système de traitement

Zone instrumentée ou capteur — 301

302 — Commande et interrogation

303 — Réponse électrique

Système de mesure — 304

307

Système d'acquisition des mesures — 305

306

Fichiers informatiques — 309

308 — Exploitation interactive

313 — Géométrie et constitution du capteur

Programme de dépouillement — 310

Formation du modèle de calcul — 311

314 — mesures initiales (date to)

Calcul de la carte de résistivité image — 312

Carte de résistivité image initiale (date to) — 316

315 — mesures courantes (date ti)

Carte de résistivité image (date ti) — 317

319 — Caractéristiques du comportement des revêtements conducteur.

320 — Programme de calcul des déformations

Carte de variation de résistivité image — 318

322 — Configuration du capteur

325 — Programme de détermination de la fissuration

Carte de déformation image — 321

323 — Données et résultats des mesures antérieures

324 — Critère de fissuration du milieu support

Carte d'interprétation Mécanique des données (déformation continues et fissuration) — 326